# EUROPÄISCHE PATENTSCHRIFT

(11) **EP 0 388 855 B1**
(45) Veröffentlichungstag und Bekanntmachung des Hinweises auf die Patenterteilung: **24.02.1993**
(21) Anmeldenummer: 90105145.8
(22) Anmeldetag: 19.03.1990
(51) Int. Cl.: G01C 15/04, G01B 3/30

(54) **Justier-einrichtung mit einer Messmarke**
Instrument with an adjusting marker
Dispositif d'ajustage avec un repère

(30) Priorität: 21.03.1989 DE 8903545 U
(43) Veröffentlichungstag der Anmeldung: 26.09.1990
(73) Patentinhaber: SIEMENS AKTIENGESELLSCHAFT, 80333 München (DE)
(72) Erfinder: Kanberg, Joachim, D-8000 München 81 (DE); Ebert, Alfred, Dipl.-Ing., D-8000 München 71 (DE)

(56) Entgegenhaltungen:
- FR-A- 576 370
- US-A- 2 953 855

## Beschreibung

Die Erfindung betrifft eine Justiereinrichtung gemäß dem Gattungsbegriff des Patentanspruchs 1.

Bestimmte Einrichtungen wie auf einer Platt form, z.B. einer Plattform eines Lastfahrzeuges, angeordnete mechanische oder elektronische Aufbauten, wie z.B. Radaranlagen oder elektronische Aufklärungsanlagen, müssen auf eine Referenzachse, z.B. auf die Längsachse des Fahrzeuges, oder auf einen Referenzpunkt einjustiert werden. Dies ist auch dann der Fall, wenn die Aufbauten z.B. auf dem Transportwege von der Plattform abmontiert und wieder aufgebaut werden müssen. Dabei kann zur Einjustierung auf eine Referenzachse oder einen Referenzpunkt eine justierbare Einrichtung verwendet werden, z.B. um mit Hilfe eines Richtkreises und der Einrichtung die Längsachse eines Fahrzeuges darzustellen. Solche Justiereinrichtungen müssen mit einer hohen Genauigkeit arbeiten.

Aus US-A-2 953 855 ist eine Höhenlehre bekannt, die nach dem Mikrometerprinzip arbeitet und eine Meßmarke aufweist, die mittels eines von außen betätigbaren Verstellelements justierbar ist. Das Verstellelement ist einseitig gelagert und umfaßt eine Spindel, die mit einer Buchse verbunden ist. Eine weitgehende Spielfreiheit der Verbindung wird dadurch erreicht, daß eine Druckfeder in einer Sackbohrung der Buchse an einer der Lagerung der Spindel entgegengesetzten Stelle an einem Stützkörper der Meßeinrichtung abgestützt ist und so die Buchse gegen die Spindel drückt. Bei dieser bekannten Meßeinrichtung ist die Meßmarke allerdings nicht in einem Gehäuse gelagert und die Meßmarke ist nicht auf eine Referenzachse oder einen Referenzpunkt einzujustieren, sondern es wird ein Meßfinger in bezug auf eine Basis mittels des Verstellelements zur Messung der Höhe eines dazwischenliegenden Werkstücks senkrecht bewegt.

Aus FR-A-576 370 ist ein Vielzweck-Meßstab bekannt, der in einem Gehäuse untergebracht ist und unter anderem an einem Ende eine Winkelmeßeinrichtung aufweist, deren Meßmarke eine verdrehsicher gelagerte Buchse bildet und in einem Gehäuseschlitz geführt ist. Die Meßmarke läuft auf einer Gewindespindel, die also im Muttergewinde einer Buchse geführt ist. Die Gewindespindel läßt sich mittels einer nach außen geführten Verstelleinrichtung drehen, wobei eine Druckfeder für Reibung einer Einstelltrommel sorgt. Eine axiale Spielfreiheit zwischen der Spindel und der Buchse wird jedoch durch die Druckfeder nicht erreicht.

Der Erfindung liegt daher die Aufgabe zugrunde, eine Justiereinrichtung zu schaffen, die eine spielfreie Justierbarkeit der Meßmarke gewährleistet, wobei das durch fertigungsbedingte Toleranzen auftretende Axiallagerspiel und Axialgewindespiel aufgehoben wird, so daß eine hohe Einstell- und Reproduziergenauigkeit erreicht wird.

Diese Aufgabe wird bei einer gattungsgemäßen Meßeinrichtung gemäß der Erfindung durch die im Patentanspruch 1 angegebenen Merkmale gelöst. Die erfindungsgemäße Justiereinrichtung läßt sich bei einfachem Einbau mit wenigen Teilen leicht und billig herstellen.

Vorteilhafte Ausgestaltungen des Gegenstandes des Anspruchs 1 sind in den Unteransprüchen angegeben.

Ein Ausführungsbeispiel einer erfindungsgemäßen Justiereinrichtung ist im folgenden anhand der Zeichnung näher beschrieben.

Es zeigen
Fig. 1 eine Draufsicht der Justiereinrichtung, wobei die rechte Hälfte geschnitten dargestellt ist und
Fig. 2 eine Vorderansicht der Justiereinrichtung.

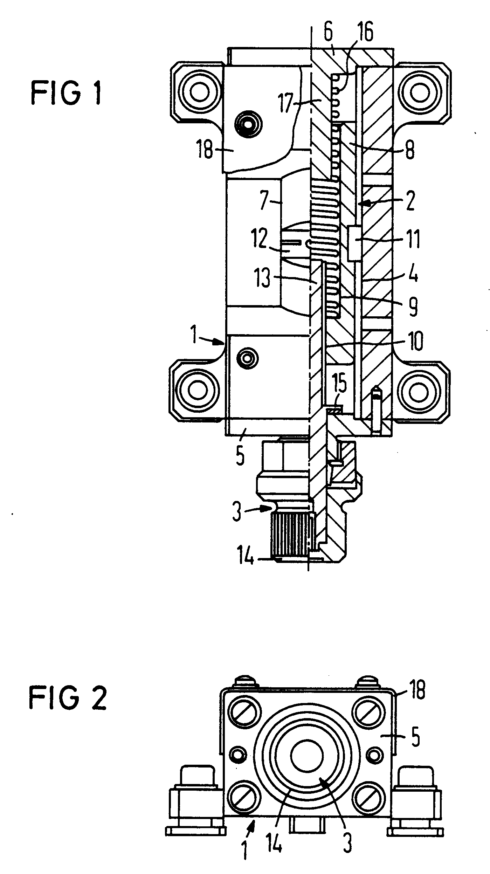

Die Justiereinrichtung weist ein z.B. an vier Eckpunkten verstellbar an einer Unterlage zu befestigendes Gehäuse 1 auf, in dem eine Meßmarke 2 gelagert ist, welche mittels eines von außen betätigbaren Verstellelementes 3 axial verschiebbar und damit auf eine Referenzachse oder auf einen Referenzpunkt justierbar ist. Das Gehäuse 1 ist zur Aufnahme und Führung der Meßmarke 2 mit einer durchgehenden Bohrung 4 versehen, die an zwei einander gegenüberliegenden Stirnseiten des Gehäuses durch jeweils einen Lagerflansch 5 bzw. 6 abgeschlossen ist. An der dem Betrachter der Fig. 1 zugewandten Oberseite ist das Gehäuse 1 im Verstellbereich der Meßmarke 2 mit einem Fenster 7 in Form einer nach außen offenen Aussparung ausgebildet, um die Meßmarke von außen einsehen zu können. Die Meßmarke 2 besteht aus einer Buchse 8, die eine Sackbohrung 9 und daran anschließend ein Muttergewinde 10 aufweist und mittels eines Paßstiftes 11 verdrehgesichert in der Bohrung 4 des Gehäuses geführt ist. Am Außenumfang ist die Buchse 8 z.B. an einer abgeflachten Stelle mit einer Markierung 12 versehen, die auf die Referenzachse oder auf den Referenzpunkt eingestellt wird. Hierzu ist die Buchse 8 gleichachsig mit einer Gewindespindel 13 des Verstellelementes 3 verbunden. Die Gewindespindel 13 ist in dem ersten Lagerflansch 5 einseitig gelagert und ragt an einem Ende aus der Bohrung 4 bzw. aus dem Lagerflansch 5 des Gehäuses 1 heraus. An diesem Ende ist die Gewindespindel 13 mit einem hier z.B. gerändelten Stellknopf 14 versehen. Ferner ist die Gewindespindel 13 noch mit einem von einem umlaufenden Bund gebildeten Anschlag 15 ausgebildet, der beim Ausgleich des axialen Lager- und Gewindespiels gegen die Innenfläche des ersten Lagerflansches 5 gedrückt wird. Hierzu ist in die Sackbohrung 9 der Buchse 8 der Meßmarke 2 gleichachsig mit der Gewindespindel 13 eine Druckfeder 16 eingesetzt, welche an einer der Lagerung der Gewindespindel entgegengesetzten Stelle des Gehäuses, nämlich am gegenüberliegenden zweiten Lagerflansch 6 abgestützt und an einem Zapfen 17 dieses Lagerflansches geführt ist. Bei Verstellung der Meßmarke 2 mit Hilfe des von der Gewindespindel 13 und dem Stellknopf 14 gebildeten drehbaren Verstellelementes 3 in Richtung der Längsachse der Buchse 8 wird die Meßmarke axial verschoben, wobei die Druckfeder 16 gegen den Boden der Sackbohrung 9 drückt. Dadurch wird das Muttergewinde 10 der Buchse 8 gegen die Gewindegänge der Gewindespindel 13 und damit die Gewindespindel mit ihrem Anschlag 15 spielfrei gegen den Lagerflansch 5 gedrückt.

Zum Schutz der Markierung 12 der Meßmarke 2, z.B. gegen Verschmutzung, ist das Gehäuse an der Oberseite mit einem in Fig.1 nur angedeuteten, an den Seitenkanten abgewinkelten Schutzblech 18 (Fig.2) abgedeckt.

## Patentansprüche

1. Justiereinrichtung mit einer Meßmarke (2), die in einem Gehäuse (1) gelagert und mittels eines von außen betätigbaren Verstellelementes (3) auf eine Referenzachse oder einen Referenzpunkt justierbar ist,
**dadurch gekennzeichnet**, daß das Verstellelement (3) eine einseitig im Gehäuse (1) gelagerte, mit der Meßmarke (2) gleichachsig verbundene Gewindespindel (13) umfaßt, daß die Meßmarke aus einer verdrehgesichert im Gehäuse geführten Buchse (8) mit einem Muttergewinde (10) zur Verbindung der Buchse mit der Gewindespindel besteht, daß in eine Sackbohrung (9) der Buchse gleichachsig mit der Gewindespindel (13) eine Druckfeder (16) eingesetzt ist, welche an einer der Lagerung der Gewindespindel entgegengesetzten Stelle des Gehäuses (1) abgestützt und so angeordnet ist, daß das Muttergewinde gegen die Gewindegänge der Gewindespindel gedrückt wird, daß das Gehäuse zur Aufnahme und Führung der Buchse mit einer durchgehenden Bohrung (4) versehen ist, welche an zwei einander gegenüberliegenden Stirnseiten des Gehäuses durch jeweils einen Lagerflansch (5 bzw. 6) abgeschlossen ist, von denen der erste Lagerflansch (5) der Lagerung der Gewindespindel und der zweite Lagerflansch (6) der Abstützung der Druckfeder dient, und daß die Gewindespindel mit einem gegen die Innenfläche des ersten Lagerflansches drückbaren Anschlag (15) versehen ist.

2. Justiereinrichtung nach Anspruch 1,
**dadurch gekennzeichnet**, daß die Buchse (8) am Außenumfang mit einer Markierung (12) versehen ist.

3. Justiereinrichtung nach Anspruch 1 oder 2,
**dadurch gekennzeichnet**, daß die Gehäuse (1) im Verstellbereich der Meßmarke (2) mit einem Fenster (7) ausgebildet ist.

4. Justiereinrichtung nach einem der vorhergehenden Ansprüche, **dadurch gekennzeichnet**, daß die Gewindespindel (13) an einem aus dem Gehäuse (1) ragenden Ende mit einem Stellknopf (14) versehen ist.

## Claims

1. Adjusting device having a measuring mark (2), which is mounted in a housing (1) and can be adjusted by means of an adjusting element (3), which can be operated from the outside, to a reference axis or a reference point, characterised in that the adjusting element (3) comprises a threaded spindle (13) which is mounted at one end in the housing (1) and is connected on the same axis to the measuring mark (2), in that the measuring mark comprises a bush (8) which is guided in the housing such that it is protected against rotation and has a female thread (10) for the connection of the bush to the threaded spindle, in that a compression spring (16) is inserted into a blind hole (9) of the bush, on the same axis as the threaded spindle (13), which compression spring (16) is mounted at a point on the housing (1) opposite the mounting of the threaded spindle and is arranged such that the female thread is pressed against the thread pitches of the threaded spindle, in that the housing is provided with a through-hole (4) for holding and guiding the bush, which hole (4) is closed on two mutually opposite ends of the housing by in each case one mounting flange (5 or 6 respectively), of which the first mounting flange (5) is used for mounting the threaded spindle and the second mounting flange (6) is used for mounting the compression spring, and in that the threaded spindle is provided with a stop (15) which can be pressed against the inner surface of the first mounting flange.

2. Adjusting device according to Claim 1, characterised in that the bush (8) is provided on the outer circumference with a marking (12).

3. Adjusting device according to Claim 1 or 2, characterised in that the housing (1) is constructed with a window (7) in the adjustment region of the measuring mark (2).

4. Adjusting device according to one of the preceding claims, characterised in that the threaded spindle (13) is provided with an adjusting knob (14) on an end which projects out of the housing (1).

## Revendications

1. Dispositif d'ajustage comprenant un repère de mesure (2), qui est monté dans un boîtier (1) et qui peut être ajusté sur un axe de référence ou sur un point de référence par un élément de réglage (3) pouvant être manoeuvré de l'extérieur,
caractérisé en ce que l'élément de réglage (3) comporte une broche filetée (13) montée d'un côté dans le boîtier (1) et reliée coaxialement au repère de mesure (2), en ce que le repère de mesure est constitué d'une douille (8) guidée sans possibilité de tourner dans le boîtier et ayant un taraudage (10) de vissage de la douille sur la broche filetée, en ce que dans un trou borgne (9) de la douille est inséré coaxialement à la broche filetée (13) un ressort de compression (16) qui s'appuie sur un point du boîtier (1) opposé au palier de la broche filetée et qui est disposé de manière à repousser le taraudage vers le filetage de la broche filetée, en ce que le bottier est muni pour la réception et le guidage de la douille d'un trou (4) traversant qui est fermé aux deux côtés frontaux opposés du boîtier par des brides formant palier (5 et 6) respectivement, la première (5) d'entre elles servant de palier à la broche filetée et la seconde (6) d'appui au ressort de compression et en ce que la broche filetée est munie d'une butée (15) susceptible d'être poussée sur la face intérieure de la première bride formant palier.

2. Dispositif d'ajustage suivant la revendication 1,
caractérisé en ce que la douille (8) est munie, à la périphérie extérieure, d'un repérage (12).

3. Dispositif d'ajustage suivant la revendication 1 ou 2,
caractérisé en ce que le boîtier (1) est muni d'une fenêtre (7) dans la région de réglage du repère de mesure (2).

4. Dispositif d'ajustage suivant l'une des revendications précédentes, caractérisé en ce que la broche filetée (13) est munie d'un bouton de réglage (14) à une extrémité sortant du boîtier (1).
